## Europäisches Patentamt

## European Patent Office

## Office européen des brevets

(19)

(11) Veröffentlichungsnummer: **0 024 585**
**B1**

(12) **EUROPÄISCHE PATENTSCHRIFT**

(45) Veröffentlichungstag der Patentschrift:
16.05.84

(51) Int. Cl.³: **H 02 H 9/06**

(21) Anmeldenummer: 80104594.9

(22) Anmeldetag: 04.08.80

(54) Schutzisolierter Netzanschluss mit Überspannungsableitern.

(30) Priorität: 24.08.79 DE 2934235

(43) Veröffentlichungstag der Anmeldung:
11.03.81 Patentblatt 81/10

(45) Bekanntmachung des Hinweises auf die Patenterteilung:
16.05.84 Patentblatt 84/20

(84) Benannte Vertragsstaaten:
BE CH LI NL

(56) Entgegenhaltungen:
DE - A - 1 462 168
DE - A - 1 515 713
DE - A - 1 944 564
DE - A - 2 337 743
DE - A - 2 345 187
DE - A - 2 347 094
DE - A - 2 627 648
DE - B - 1 194 041
FR - A - 1 175 318
FR - A - 2 398 400
US - A - 2 443 017
US - A - 2 987 642
US - A - 3 141 108
US - A - 3 283 196
US - A - 3 465 205
US - A - 3 469 047
US - A - 3 811 070

(73) Patentinhaber: **ANT Nachrichtentechnik GmbH,
Gerberstrasse 33, D-7150 Backnang (DE)**

(72) Erfinder: **Hasse, Peter, Dr.-Ing.,
Eberhard-Faber-Strasse 3b, D-8430 Neumarkt / Opf.
(DE)**
Erfinder: **Wiesinger, Johannes, Prof. Dr.-Ing.,
Bäumlstrasse 2, D-8031 Puchheim (DE)**
Erfinder: **Pivit, Erich, Dr.-Ing., Akazienhain 14,
D-7151 Allmersbach im Tal (DE)**
Erfinder: **Meuser, Anton, Dipl.-Ing., Am unteren
Schlossberg 28, D-7148 Remseck 1 (DE)**

(74) Vertreter: **Schickle, Gerhard, Dipl.-Ing. et al, ANT
Nachrichtentechnik GmbH Patent- und Lizenzabteilung
Gerberstrasse 33, D-7150 Backnang (DE)**

## Schutzisolierter Netzanschluß mit Überspannungsableitern

Die Erfindung betrifft einen schutzisolierten Netzanschluß mit Überspannungsableitern zum Schutz einer elektrischen Betriebsstätte gegen Überspannungen gemäß dem Oberbegriff des Patentanspruchs 1.

Die Schutzmaßnahme Schutzisolierung (VDE 0100/5.73 § 7) bietet dem Netzanschluß, insbesondere von transportablen elektrischen Betriebsstätten, Vorteile:

1. Unabhängigkeit von der Schutzmaßnahme des jeweiligen speisenden Netzes,
2. Unabhängigkeit von den jeweiligen Erdungsverhältnissen.

Solche transportablen Betriebsstätten mit schutzisoliertem Netzanschluß sind bekannt (VDE 0800 Teil 2b/11.76 § 20).

Die Schutzisolierung ist eine vollkommen in sich selbst wirksame Schutzmaßnahme, ohne daß Schutzleiter und zusätzlich eingesetzte Schutzorgane mitwirken. Bei der Schutzisolierung wird nicht mit einem Versagen gerechnet.

Bei der Schutzisolierung wird zwischen doppelter und verstärkter Isolierung unterschieden (VDE 0730 Teil 1/3.72 § 2b) 10 bzw. 11). Die doppelte Isolierung besteht aus der Betriebsisolierung und aus der sogenannten zusätzlichen Isolierung (VDE 0730 Teil 1/3.72 § 2b) 8 bzw. 9). Die Betriebsisolierung schließt im Gegensatz zur zusätzlichen Isolierung ein Versagen nicht aus. Die verstärkte Isolierung ist eine einzige, jedoch der doppelten Isolierung gleichwertige Isolierung. Sie darf jedoch nur dann angewendet werden, wenn eine getrennte Anordnung von Betriebs- und zusätzlicher Isolierung offensichtlich unmöglich ist (VDE 0730 Teil 1/3.72 § 22o)).

Transportable Betriebsstätten, beispielsweise Richtfunkstationen, werden häufig an Orten aufgestellt, an denen oder in deren Umgebung mit Blitzeinschlägen zu rechnen ist, weshalb ein Schutz gegen Überspannungen erforderlich ist. Beim schutzisolierten Netzanschluß muß die Überspannungsschutzschaltung so zuverlässig sein wie die Schutzisolierung, so daß mit einem Versagen und daraus resultierender zu hoher Berührungsspannung nicht gerechnet werden muß.

Maßnahmen zum Schutz gegen Überspannungen sind in der Praxis bisher nur in Verbindung mit Schutzmaßnahmen durch Schutzleiter und Schutzorgane (VDE 0100/5.73 §§ 9—14) bekanntgeworden (beispielsweise durch Nullung, Schutzerdung, Fehlerstromschutzschaltung usw.), dagegen nicht in Verbindung mit Schutzisolierung.

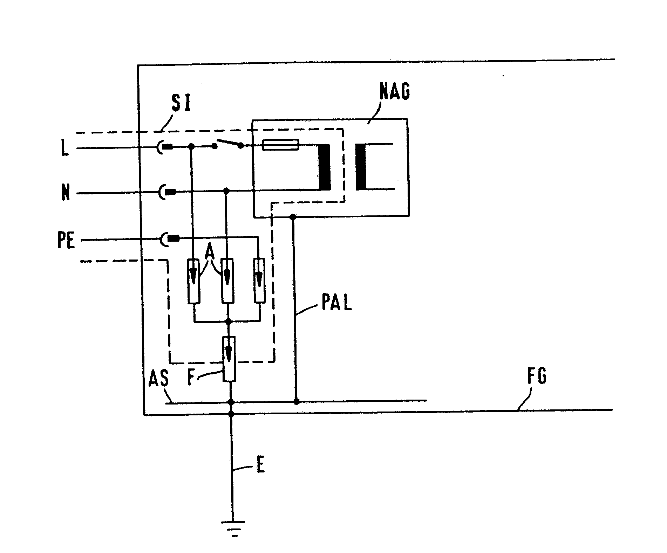

In der VDE-Bestimmung 0845 (DIN 57 845) »Schutz von Fernmeldeanlagen gegen Überspannungen« ist eine Überspannungsschutzschaltung für den schutzisolierten Netzanschluß von transportablen Betriebsstätten der Fernmeldetechnik nach VDE 0800 Teil 2b/11.76 § 20 beschrieben (Abs. 3.11.6, Bild 6).

Diese Schaltung entspricht zwar den Anforderungen des Schutzes gegen Überspannungen, jedoch nicht den Anforderungen der Schutzmaßnahme Schutzisolierung bei Einsatz von im Handel erhältlichen Überspannungsableitern. Letztere weisen ein begrenztes Isolationsvermögen auf und können zu ganz gefährlichen Situationen führen, da beispielsweise nach einem ersten Ansprechen der Überspannungsableiter deren Isolationswiderstand stark absinken kann. Es wurde deshalb eine Leckstromüberwachung der Überspannungsableiter vorgeschlagen (VDE 0845a), um ein Absinken des Isolationswiderstandes zu erkennen, bzw. um im Fehlerfall die Netzleiterverbindung mittels Schalter auszulösen. Der Erdungswiderstand dieser Schutzmaßnahme muß unter einem vorgesehenen Wert liegen, er muß überprüft bzw. gemessen und bei längerem Einsatz am gleichen Ort auch in vorgegebenen Zeitabständen überwacht werden, wozu eine Fachkraft erforderlich ist. Abgesehen davon, daß ein ausreichend niedriger Erdungswiderstand häufig überhaupt nicht realisiert werden kann, beispielsweise bei Aufstellung der Betriebsstätten auf Beton, Fels, Sand usw., ist es für den Anwender sehr aufwendig und unbefriedigend, wenn die Sicherheit im normalen Betrieb nur durch umfangreiche Überwachung und Routinemessungen gewährleistet werden kann. Solche Maßnahmen sind auch nicht im Sinne der Schutzmaßnahme Schutzisolierung, die dem Anwender einen zuverlässigen völlig in sich wirksamen Schutz bieten soll.

Aufgabe der Erfindung war es deshalb, einen Netzanschluß mit Überspannungsschutz und mit Schutzisolierung nach VDE 0100 (Schutz gegen zu hohe Berührungsspannungen) anzugeben, wobei keine aufwendigen Maßnahmen seitens des Anwenders erforderlich sind und wobei der Schutz nach Ableitung auch großer Ströme, wie sie z. B. bei direkten Blitzeinschlägen vorkommen, erhalten bleibt.

Die Lösung erfolgt mit den im Patentanspruch 1 angegebenen Mitteln.

Mit der Erfindung wird ein schutzisolierter Netzanschluß mit Überspannungsschutz ermöglicht, dessen Schutz gegen zu hohe Berührungsspannungen auch bei direkten Blitzeinschlägen keine Beeinträchtigung erfährt.

Es folgt eine Beschreibung der Erfindung anhand der Figur. Die Figur stellt ein Ausführungsbeispiel der Erfindung dar. Eine beispielsweise transportable elektrische Betriebsstätte wird über ein Netzkabel, das den stromführenden Leiter L, den Mittelleiter N und den Schutzleiter PE enthält, mit einem Netz verbunden.

Die stromführenden Leiter sind über übliche Schalter und Sicherungen auf den Zwischentransformator des Netzanschaltgerätes NAG der Betriebsstätte schaltbar. Alle Leiter des Netzanschlusses sind unmittelbar am Eintritt in das Fahrzeug mit Überspannungsableitern A der 1. Art verbunden, deren Fußpunkte auf den Kopfpunkt eines Überspannungsableiters F, der 2. Art, einer Funkenstrecke, angeschlossen sind. Der Fußpunkt der Funkenstrecke F ist mit einer Potentialausgleichsschiene AS, die innerhalb der Betriebsstätte verläuft, verbunden. Die Potentialausgleichsschiene AS ist ihrerseits mit dem Fahrzeuggehäuse FG und über den äußeren Erdanschluß E mit Erde verbunden. Die metallenen Gehäuse des Netzanschlußgerätes NAG sowie der anderen Fernmeldegeräte in der Betriebsstätte sind über einen Potentialausgleichsleiter PAL an der Potentialausgleichsschiene AS angeschlossen.

Die Überspannungsableiter der 1. Art müssen den in VDE 0675 »Richtlinien für Überspannungsschutzgeräte, Teil 1 Ventilableiter für Wechselspannungsnetze« für Niederspannungsnetze (Spannungen bis zu 1000 Volt) festgelegten Anforderungen genügen und insbesondere das in VDE 0675 geforderte Löschverhalten aufweisen, und zwar auch bei direkten Blitzeinschlägen. Ihre Zuverlässigkeit entspricht der einer Betriebsisolierung. Der Überspannungsableiter F der 2. Art, die Funkenstrecke, bildet die zusätzliche Isolierung der Überspannungsschutzschaltung. Die Bemessung der Funkenstrecke hat so zu erfolgen, daß sie den Summenstrom der drei Überspannungsableiter A der 1. Art aufnehmen kann. Zu beachten ist, daß die Schutzisolierung SI (in der Figur strichliert dargestellt) eine Spannungsfestigkeit aufweist, die mindestens der Summe aus der Ansprechspannung der Funkenstrecke und der Ansprechspannung der Überspannungsableiter A der 1. Art entspricht. Dabei ist zu berücksichtigen, daß die Isolation des Netzanschlusses sowohl gegen das Fahrzeuggehäuse FG als auch gegen den Ausgangskreis des Zwischentransformators die für Schutzisolierung erforderliche Zuverlässigkeit besitzen muß.

In vorteilhafter Weise ist der Netzanschluß mit den Überspannungsleitern der 1. Art gemäß EP-A-00 24 584 (entsprechend DE-A-29 34 236) und der 2. Art gemäß EP-A-00 24 583 (entsprechend DE-A-29 34 237) realisierbar.

## Patentansprüche

1. Schutzisolierter, über einen Leiter (L, N, PE) geführter Netzanschluß zum Schutz einer elektrischen Betriebsstätte gegen Überspannungen, wobei zwischen Leiter (L, N, PE) und Erde (E) ein Überspannungsableiter zur Ableitung von durch Überspannung hervorgerufenen Strömen geschaltet ist, gekennzeichnet durch die Reihenschaltung von mindestens einem Überspannungsableiter (A) einer 1. Art, der den Netzfolgestrom zu löschen vermag, mit mindestens einem Überspannungsableiter (F) einer 2. Art, wobei im ungezündeten Zustand, d. h. vor einer Zündung, die hervorgerufen sei durch direkten Blitzeinschlag oder nukleare elektromagnetische Pulse (NEMP), und nach der Löschung eines durch die Zündung hervorgerufenen Bogens, die Isolierung des Überspannungsableiters (A) der 1. Art den Anforderungen der Betriebsisolierung und die Isolierung des Überspannungsableiters (F) der 2. Art den Anforderungen der zusätzlichen Isolierung entspricht und wobei der Kopfpunkt des Überspannungsableiters (A) der 1. Art mit dem Leiter des stromzuführenden Netzes verbunden und der Fußpunkt des Überspannungsableiters (F) der 2. Art geerdet sind.

2. Netzanschluß nach Anspruch 1, dadurch gekennzeichnet, daß der Überspannungsableiter (A) der 1. Art aus einer Reihen- und/oder Parallel-Schaltung von Varistoren und/oder Funkenstrecken besteht.

3. Netzanschluß nach Anspruch 1 oder 2, dadurch gekennzeichnet, daß der Überspannungsableiter (F) der 2. Art aus einer Reihen- und/oder Parallel-Schaltung von Funkenstrecken besteht.

4. Über mehrere Leiter (L, N, PE) geführter Netzanschluß nach einem der vorhergehenden Ansprüche, dadurch gekennzeichnet, daß die Leiter (L, N, PE) des stromzuführenden Netzes jeweils mit dem Kopfpunkt eines Überspannungsableiters (A) der 1. Art verbunden sind und der Fußpunkt des Überspannungsableiters (F) der 2. Art an die Potentialausgleichsschiene (AS) der Betriebsstätte angeschlossen ist.

5. Netzanschluß nach Anspruch 4, dadurch gekennzeichnet, daß die Potentialausgleichsschiene (AS) mit dem Gehäuse (SG) der Betriebsstätte verbunden ist.

6. Netzanschluß nach Anspruch 4 oder 5 für eine transportable Betriebsstätte der Fernmeldetechnik mit Netzanschalt- und Fernmeldegeräten, dadurch gekennzeichnet, daß die metallenen Gehäuse des Netzanschaltgerätes (NAG) und der Fernmeldegeräte im Innern der Betriebsstätte über einen Potentialausgleichsleiter (PAL) mit der Potentialausgleichsschiene (AS) verbunden sind.

## Claims

1. Portectively insulated mains connection led through a conductor (L, N, PE) for the portection of an electrical workshop against surge voltages, wherein a surge voltage arrester for the diversion of currents caused by surge voltage is connected between conductor (L, N, PE) and earth (E), characterized by the series connection of at least one surge voltage arrester (A) of a first kind, which is capable of quenching the consequential mains current, with at least one surge voltage arrester (F) of a second kind, wherein in the unignited state, i.e. before an ignition, which is caused by direct lightning stroke or nuclear electromagnetic pulses (NEMP), and after the quenching of an arc caused by the ignition, the insulation of the surge voltage arrester (A) of the first kind meets the demands of the operational insulation and the insulation of the surge voltage arrester (F) of the second kind meets the demands of the additional insulation and wherein the head point of the surge voltage arrester (A) of the first kind is connected with the conductor of the current-supplying mains and the foot point of the surge voltage arrester (F) of the second kind is earthed.

2. Mains connection according to claim 1, characterised thereby, that the surge voltage arrester (A) of the first kind consists of a series and/or parallel connection of varistors and/or spark gaps.

3. Mains connection according to claim 1 or 2, characterised thereby, that the surge voltage arrester (F) of the second kind consists of a series and/or parallel connection of spark gaps.

4. Mains connection led through several conductors (L, N, PE) according to one of the preceding claims, characterised thereby, that the conductors (L, N, PE) of the current-supplying mains are each connected with the head point of a surge voltage arrester (A) of the first kind and the foot point of the surge voltage arrester (F) of the second kind is connected to the potential equalising bus bar (AS) of the workshop.

5. Mains connection according to claim 4, characterised thereby, that the potential equalising bus bar (AS) is connected with the housing (SG) of the workshop.

6. Mains connection according to claim 4 or 5 for a transportable workshop of the telecommunications technique with mains switching and telecommunications devices, characterised thereby, that the metallic housings of the mains switching device and of the telecommunications devices are connected in the interior of the workshop through a potential equalising conductor (PAL) with the potential equalising bus bar (AS).

**Revendications**

1. Bloc d'alimentation ou appareil de raccordement au réseau à isolation de protection, piloté au moyen d'un conducteur (L, N, PE), pour la protection d'un poste de service électrique contre les surtensions, un parafoudre, destiné à dériver des courants occasionnés par une surtension, étant couplé entre le conducteur (L, N, PE) et la terre (E), caractérisé par le couplage en série d'au moins un parafoudre (A) d'un premier type, qui est à même d'éteindre le courant de suite du réseau, avec au moins un parafoudre (F) d'un deuxième type, la disposition étant telle que, à l'étant non amorcé, c'est-à-dire avant un amorgage — que celui-ci soit occasionné par un coup de tonnerre direct ou par impulsions électromagnétiques nucléaires (IEMN) — et après l'extinction d'une arc provoqué par l'amorçage, l'isolation du parafoudre (A) du premier type satisfait aux exigences de l'isolation de service, tandis que l'isolation du parafoudre (F) du deuxième type satisfait aux exigences de l'isolation complémentaire, le sommet du parafoudre (A) du premier type étant relié au conducteur du réseau d'amenée de courant et la racine du parafoudre (F) du deuxième type étant mise à la terre.

2. Bloc d'alimentation suivant la revendication 1, caractérisé en ce que le parafoudre (A) du premier type consiste en un couplage série et/ou parallèle de varistors et ou d'éclateurs.

3. Bloc d'alimentation suivant la revendication 1 ou 2, caractérisé en ce que le parafoudre (F) du deuxième type consiste en un montage série et/ou parallèle d'éclateurs.

4. Bloc d'alimentation piloté par plusieurs conducteurs (L, N, PE), suivant une quelconque des revendications précédentes, caractérisé en ce que les conducteurs (L, N, PE) du réseau d'amenée de courant sont connectés chacun au sommet d'un parafoudre (A) du premier type et que la racine du parafoudre (F) du deuxième type est raccordée à la barre de compensation de potentiel (AS) du poste de service.

5. Bloc d'alimentation suivant la revendication 4, caractérisé en ce que la barre de compensation de potentiel (AS) est reliée à la caisse (SG) du poste de service.

6. Bloc d'alimentation suivant la revendication 4 ou 5, pour un poste de service transportable destiné au domaine des télécommunications, poste équipé d'appareils de commutation du réscau et d'appareils de télécommunication, caractérisé en ce que les coffrets métalliques de l'appareil de raccordement au réseau (NAG) et des appareils de télécommunication sont reliés, à l'intérieur du poste de service, au moyen d'un conducteur de compensation de potentiel (PAL), à la barre de compensation de potentiel (AS).